# EUROPEAN PATENT SPECIFICATION

(11) **EP 0 777 961 B1**
(45) Date of publication and mention of the grant of the patent: **27.03.2002**
(21) Application number: 96203407.0
(22) Date of filing: 02.12.1996
(51) Int. Cl.: A01J 5/017

(54) **An implement for milking animals**
Vorrichtung zum Melken von Tieren
Appareil pour la traite d'animaux

(30) Priority: 15.12.1995 NL 1001912
(43) Date of publication of application: 11.06.1997
(73) Proprietor: MAASLAND N.V., 3155 PD Maasland (NL)
(72) Inventor: van der Lely, Alexander, 6340 Baar (CH)
(74) Representative: Corten, Maurice Jean F.M.

(56) References cited:
- EP-A- 0 619 941
- EP-A- 0 639 327
- WO-A-94/12020
- US-A- 4 726 322

## Description

The present invention relates to an implement for milking animals, such as cows, comprising at least one milking parlour including at least one milking robot for automatically connecting teat cups to the teats of an animal to be milked, automatically milking this animal, and automatically disconnecting the the teat cups from the teats, which implement is provided with at least one detector for determining the position of the teats. Such on implement is known from EP-A2-0562655 disclosing that the housing of a detector and the detector in the housing are integrally movable.

From e.g. PCT patent application WO 94/12020. In the implement described in this document the detectors are constituted by elements for creating an image, in particular by video recording elements, which are arranged on both sides of the milking parlour. When arranging such detectors the problem could occur that, on the one hand, the detectors have to be disposed relatively close to the udder of the animals to be milked, while, on the other hand, the distance thereto has to be such that the detectors are prevented from being damaged e.g. because of kicking by the animal to be milked.

For the purpose of obviating this drawback or at least limiting same to a considerable extent, in accordance with the invention, the implement described in the preamble is characterized in that at least two detectors are mounted so as to be movable in their own housing, each housing being fixedly arranged relative to the milking parlour. By accommodating the detectors in a suchlike housing said detectors are protected in particular against kicking by the animals to be milked. The housing of the detectors is preferably fitted on both sides of the milking parlour, in the floor of said milking parlour, on the floor thereof, or near thereto.

The detectors in the housing can be passive, i.e. that they do not transmit themselves radiation in order to react on reflections thereof, but that they react on incident radiation of all sorts of frequencies; they can be constituted by an element for creating an image and in particular by a video recording element or a video camera. On the other hand, the detectors can also be of the active type and be constituted by a transmitter-receiver, in particular a laser transmitter and receiver element. Whatever type of detector is used, the detector will constantly be movable such that the position in three coordinates can be determined of at least the teats which, seen in the range of view of the detectors, are the foremost ones; the detector can in particular be mounted movably in its housing in such a manner that by means of said detector a space sector can be scanned. In particular the detectors can be disposed in the housing so as to be motor drivable about two axes, whereby in an concrete embodiment a detector is movable about a substantially horizontal axis as well as about its own longitudinal axis.

According to an other aspect of the invention, when e.g. a laser transmitter and receiver element is used, a housing can be provided with a filter at least letting through frequencies within the frequency band to which the detector is sensible. This filter can constitute the upper side of the housing. A very solid solution is obtained when the housing is fitted in the floor of the milking parlour and the upper side of the housing is constituted by a dome-shaped element. In order to enable the detector disposed in the housing to function optimally, at least the upper side of the housing will have to be cleaned. For that purpose, in accordance with the invention, the implement is provided with a cleaning device for this housing, in particular a spraying device for the upper side of the housing.

For a better understanding of the invention and to show how the same may be carried into effect, reference will now be made, by way of example, to the embodiment shown in the accompanying drawings, in which:
Figure 1 shows schematically, in plan view, the implement according to the invention;
Figure 2 shows schematically a side view of said implement;
Figures 3 and 4 show a plan view respectively a longitudinal cross-section of a detector disposed in a housing.

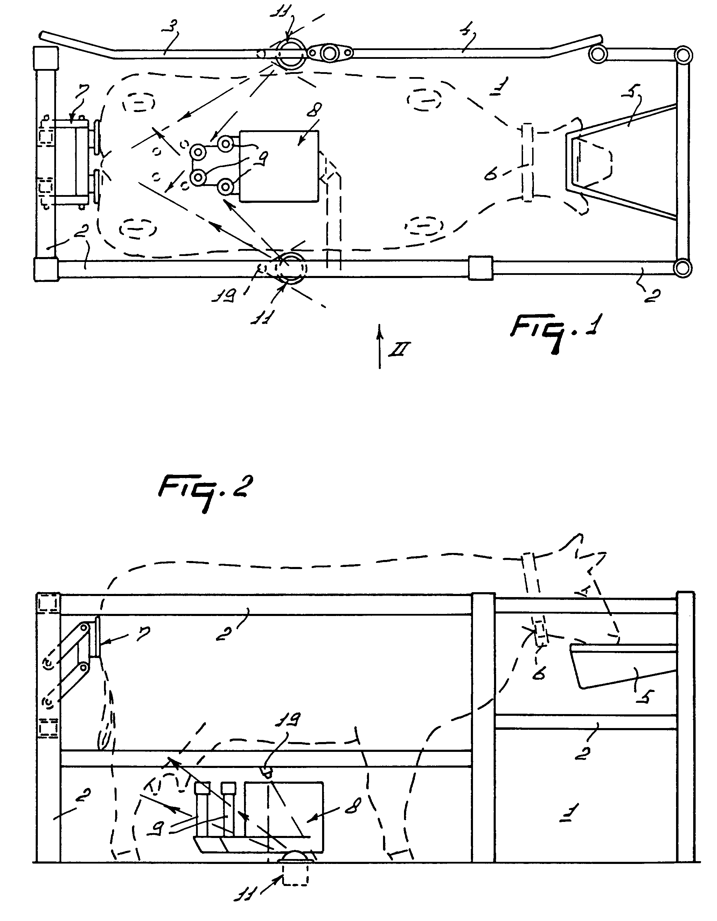

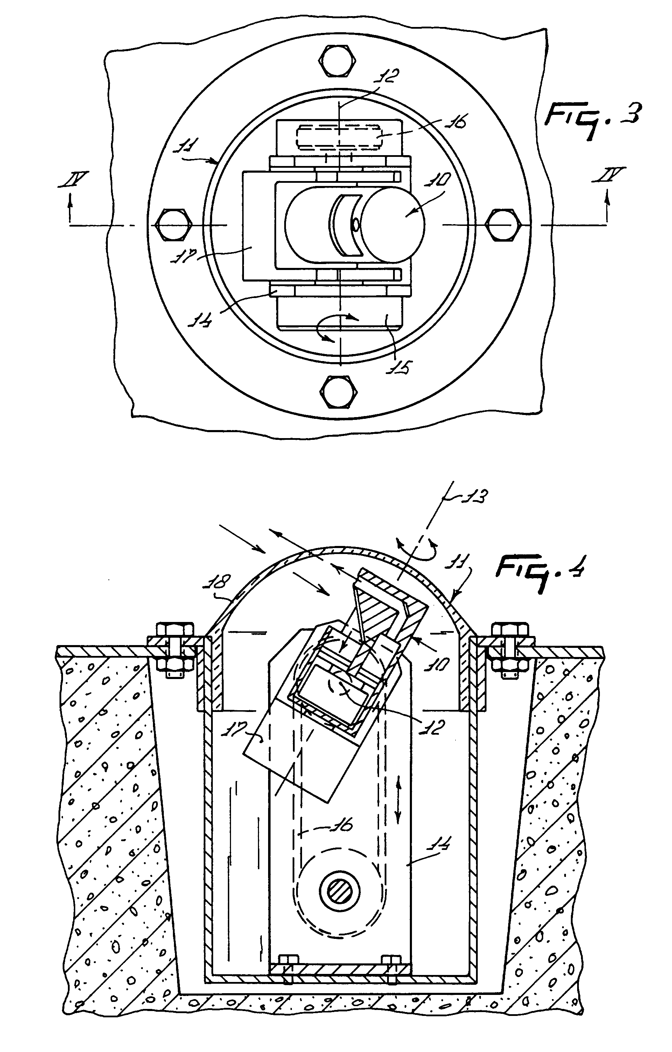

The figures show a milking parlour 1 in which an animal to be milked is marked in dashed lines. The milking parlour 1 is confined by a fencing 2 in which, at one of the longitudinal sides, there is provided an entrance door 3 and an exit door 4. At the front side of the milking parlour a feeding trough 5, constituting part of a (non-shown) automatic feeding system, is fitted to the fencing 2. An animal entering the milking parlour 1 is identified there by means of an animal identification system known per se, constituted by a collar 6, worn by the animal, which collar is provided with a transponder cooperating with a (non-shown) sensor disposed near the feeding trough, which sensor is in connection with the computer system of the implement. As the animal identification system does not constitute part of the invention, said system will not be described in detail. In order better to position the animal in the longitudinal direction, there is mounted at the rear side of the milking parlour, as shown in Figures 1 and 2, a buffer element 7 to be pressed against the rear side of the animal. The implement further comprises a milking robot 8 for automatically connecting teat cups 9 to the teats of an animal to be milked, automatically milking this animal and automatically disconnecting the teat cups 9 from the teats. A suchlike milking robot has been known for some time already in all sorts of embodiments. For automatically connecting the teat cups to the teats of an animal to be milked it is necessary to know the position of the teats of the animal. Although for this purpose there may be used historic data in relation to the teat position, in particular when the animal is accurately positioned in the milking parlour or when the position of the animal in the milking parlour is known, therebesides or even in stead thereof, one or more detectors specially provided therefor can be used. In the present embodiment, two detectors are available for determining the position of the teats in three coordinates; these detectors are indicated by the reference numeral 10 (see Figure 3 and 4). These detectors are disposed in an own housing 11, fixedly arranged relative to the milking parlour, which housing is preferably fitted, as indicated in Figure 1, on both sides of the milking parlour 1, in the floor of said milking parlour, on the floor thereof, or near thereto. As indicated in Figures 2 and 4, this housing 11 is incorporated to a considerable extent in the floor of the milking parlour. Although, in this embodiment there can be arranged passive detectors, which can in particular be constituted by an element for creating an image, i.e. more specifically, a video recording element or a video camera, each of these detectors, one of which is represented in Figures 3 and 4, is constituted by a transmitter-receiver and in particular by a laser transmitter and receiver element. The detector shown in Figures 3 and 4 is of the type described in European patent application 0455305. For the purpose of adapting this detector to the function of determining the position of the teats in three coordinates, the detector is mounted in the housing 11 so as to be movable about a substantially horizontal axis 12, as well as about its own longitudinal axis 13. The detector 10 is movably mounted on a mounting element screwed on the bottom of the housing 11. To said mounting element 14 there is fastened a motor 15 which, by means of a belt transmission 16, is capable of turning the detector 10 and having it reciprocate about the axis 12. The detector 10, which is movable about the axis 12, is provided at its lower side with a motor 17 enabling the detector 10 to rotate about its own longitudinal axis 13 and to reciprocate. The motors 14 and 17 are controlled from the computer system of the implement. This computer system can be supposed to constitute part of the milking robot 8. Under the control of this computer system a space sector can be scanned by the detector 10. In order to be able to determine the position in three coordinates of at least the animal's teats which, seen in the range of view of the detector, are the foremost ones, the detectors 10 have to be arranged in their housing such that the teats are located within the space sector which is scanned by means of the detectors 10. It is noticed that, although it is preferable to dispose the movably mounted detector 10 in the housing 11, it remains possible to dispose the movably mounted detector according to Figures 3 and 4 outside a suchlike housing. Also in that case, of course, it will be possible to scan a space sector where the teats are supposed to be located by means of the detectors, and thus to determine the three position coordinates of the teats.

For the purpose of increasing the reliability of the detector, the housing 11 can be provided with a filter at least letting through frequencies within the frequency band to which the detector is sensible. When the detectors are arranged in the floor of the milking parlour or near thereto, this filter can also constitute in a favourable manner the upper side of the housing. In order to optimize the protection of the detectors, the housing, as indicated in Figure 4, comprises a dome-shaped element 18 serving as a cover of the housing 11; said dome-shaped element 18 can also function as a filter for the light incident on the detector. Furthermore, in order not to influence the function of the detectors in an unfavourable manner, the dome-shaped element 18 will have to be cleaned regularly. For that purpose the implement is provided with a cleaning device 19 for the housing 11. In the present embodiment, on both sides of the milking parlour, there is fastened to the fencing 2 a cleaning device 19 constituted by a spraying device, by means of which a cleaning fluid can be sprayed over the upper side of the housing 11, in particular over the dome-shaped element 18 thereof.

The invention is not restricted to the embodiment described and shown in the figures, but also relates to all sorts of modifications thereof, of course, falling within the scope of the following claims.

## Claims

1. An implement for milking animals, such as cows, comprising at least one milking parlour (1) including at least one milking robot (8) for automatically connecting teat cups (9) to the teats of an animal to be milked, automatically milking this animal, and automatically disconnecting the teat cups (9) from the teats, which implement is provided with a detector (10) positioned in a housing (11) for determining the position of the teats, **characterized in that** at least two detectors (10) are mounted so as to be movable in their own housing (11), each housing being fixedly arranged relative to the milking parlour (1).

2. An implement as claimed in claim 1, **characterized in that** the housing (11) of the detectors (10) is fitted on both sides of the milking parlour (1), in the floor of said milking parlour, on the floor thereof, or near thereto.

3. An implement as claimed in claim 1 or 2, **characterized in that** the detectors (10) are passive and can be constituted by an element for creating an image, in particular a video recording element or a video camera.

4. An implement as claimed in claim 1 or 2, **characterized in that** a detector (10) is constituted by a transmitter-receiver, in particular a laser transmitter and receiver element.

5. An implement as claimed in any one of the preceding claims, **characterized in that** a detector (10) is movable such that the position can be determined of at least the teats which, seen in the range of view of the detector (10), are the foremost ones.

6. An implement as claimed in claim 5, **characterized in that** a detector (10) is movable in such a manner that by means of said detector (10) a space sector can be scanned.

7. An implement as claimed in any one of the preceding claims, **characterized in that** a detector (10) is disposed in the housing (11) so as to be motor drivable about two axes (12, 13).

8. An implement as claimed in claim 7, **characterized in that** a detector (10) is disposed in the housing (11) so as to be movable about a substantially horizontal axis (12) as well as about its longitudinal axis (13).

9. An implement as claimed in any one of the preceding claims, **characterized in that** a housing (11) is provided with a filter at least letting through frequencies within the frequency band to which the detector (10) is sensible.

10. An implement as claimed in claim 9, **characterized in that** the filter constitutes the upper side of the housing (11).

11. An implement as claimed in claim 10, **characterized in that** the housing (11) is fitted in the floor of the milking parlour (1) and the upper side of the housing (11) is constituted by a dome-shaped element (18).

12. An implement as claimed in any one of the preceding claims, **characterized in that** said implement is provided with a cleaning device (19) for the housing (11).

13. An implement as claimed in claim 12, **characterized in that** the cleaning device (19) is constituted by a spraying device for the upper side of the housing (11).

## Patentansprüche

1. Vorrichtung zum Melken von Tieren, wie z. B. Kühen, mit mindestens einem Melkstand (1) und mindestens einem Melkroboter (8) zum automatischen Anschließen von Zitzenbechern (9) an die Zitzen eines zu melkenden Tieres, zum automatischen Melken dieses Tieres und zum automatischen Abnehmen der Zitzenbecher (9) von den Zitzen, wobei die Vorrichtung mit einem in einem Gehäuse (11) angeordneten Detektor (10) zur Ermittlung der Position der Zitzen versehen ist,
**dadurch gekennzeichnet, daß** mindestens zwei Detektoren (10) in ihrem jeweiligen Gehäuse (11) bewegbar angebracht sind, wobei jedes Gehäuse relativ zu dem Melkstand (1) fest angeordnet ist.

2. Vorrichtung nach Anspruch 1,
**dadurch gekennzeichnet, daß** das Gehäuse (11) der Detektoren (10) auf beiden Seiten des Melkstandes (1) in dem Boden des Melkstandes, auf dessen Boden oder nahe diesem angeordnet ist.

3. Vorrichtung nach Anspruch 1 oder 2,
**dadurch gekennzeichnet, daß** die Detektoren (10) passiv sind und aus einem Element zur Erzeugung eines Bildes, insbesondere einem Videoaufzeichnungselement oder einer Videokamera bestehen können.

4. Vorrichtung nach Anspruch 1 oder 2,
**dadurch gekennzeichnet, daß** ein Detektor (10) durch einen Sender/Empfänger, insbesondere einen Lasersender und ein Laserempfangselement gebildet ist.

5. Vorrichtung nach einem der vorhergehenden Ansprüche,
**dadurch gekennzeichnet, daß** ein Detektor (10) derart bewegbar ist, daß die Position zumindest derjenigen Zitzen ermittelt werden kann, die in Sichtrichtung des Detektors (10) die vorderen sind.

6. Vorrichtung nach Anspruch 5,
**dadurch gekennzeichnet, daß** ein Detektor (10) derart bewegbar ist, daß mittels des Detektors (10) ein Raumsektor abgetastet werden kann.

7. Vorrichtung nach einem der vorhergehenden Ansprüche,
**dadurch gekennzeichnet, daß** ein Detektor (10) in dem Gehäuse (11) derart angeordnet ist, daß er um zwei Achsen (12, 13) motorisch antreibbar ist.

8. Vorrichtung nach Anspruch 7,
**dadurch gekennzeichnet, daß** ein Detektor (10) in dem Gehäuse (11) derart angeordnet ist, daß er um eine im wesentlichen horizontale Achse (12) sowie um seine Längsachse (13) bewegbar ist.

9. Vorrichtung nach einem der vorhergehenden Ansprüche,
**dadurch gekennzeichnet, daß** ein Gehäuse (11) mit einem Filter versehen ist, der zumindest diejenigen Frequenzen innerhalb des Frequenzbandes durchläßt, auf die der Detektor (10) anspricht.

10. Vorrichtung nach Anspruch 9,
**dadurch gekennzeichnet, daß** der Filter die Oberseite des Gehäuses (11) bildet.

11. Vorrichtung nach Anspruch 10,
**dadurch gekennzeichnet, daß** das Gehäuse (11) im Boden des Melkstandes (1) angeordnet ist und die Oberseite des Gehäuses (11) durch ein kuppelförmiges Element (18) gebildet ist.

12. Vorrichtung nach einem der vorhergehenden Ansprüche,
**dadurch gekennzeichnet, daß** die Vorrichtung mit einer Reinigungsvorrichtung (19) für das Gehäuse (11) versehen ist.

13. Vorrichtung nach Anspruch 12,
**dadurch gekennzeichnet, daß** die Reinigungsvorrichtung (19) durch eine Sprühvorrichtung für die Oberseite des Gehäuses (11) gebildet ist.

## Revendications

1. Installation pour traire des animaux, tels que des vaches, comprenant au moins une stalle de traite (1) comprenant au moins un automate de traite (8) pour connecter automatiquement des gobelets trayeurs (9) aux trayons d'un animal à traire, traire automatiquement cet animal, et déconnecter automatiquement les gobelets trayeurs (9) des trayons, ladite installation comprenant au moins un détecteur (10) positionné dans un boîtier (11) pour déterminer la position des trayons, **caractérisée en ce qu'**au moins deux détecteurs (10) sont montés de façon à être mobiles dans leur propre boîtier (11), chaque boîtier étant agencé de façon fixe par rapport à la stalle de traite (1).

2. Installation selon la revendication 1, **caractérisée en ce que** le boîtier (11) des détecteurs (10) est installé des deux côtés de la stalle de traite (1) dans le sol de ladite stalle de traite, sur le sol de celle-ci, ou à proximité de celleci.

3. Installation selon la revendication 1 ou 2, **caractérisée en ce que** les détecteurs (10) sont passifs et peuvent être constitués d'un élément pour créer une image, en particulier d'un élément d'enregistrement vidéo ou d'une caméra vidéo.

4. Installation selon la revendication 1 ou 2, **caractérisée en ce qu'**un détecteur (10) est constitué d'un émetteur-récepteur, en particulier d'un élément émetteur et récepteur laser.

5. Installation selon l'une quelconque des revendications précédentes, **caractérisée en ce qu'**un détecteur (10) est mobile de telle sorte que la position puisse être déterminée pour au moins les trayons qui vus dans le champ de visée du détecteur (10), sont les plus proches.

6. Installation selon la revendication 5, **caractérisée en ce qu'**un détecteur (10) est mobile de telle manière qu'au moyen dudit détecteur (10) un secteur spatial peut être balayé.

7. Installation selon l'une quelconque des revendications précédentes, **caractérisée en ce qu'**un détecteur (10) est disposé dans le boîtier (11) de façon à pouvoir être entraîné par un moteur autour de deux axes (12, 13).

8. Installation selon la revendication 7, **caractérisée en ce qu'**un détecteur (10) est disposé dans le boîtier (11) de façon à être mobile autour d'un axe sensiblement horizontal ainsi (12) qu'autour de son propre axe longitudinal (13).

9. Installation selon l'une quelconque des revendications précédentes, **caractérisée en ce qu'**un bôîtier (11) comprend un filtre laissant passer au moins les fréquences dans la bande de fréquence à laquelle le détecteur (10) est sensible.

10. Installation selon la revendication 9, **caractérisée en ce que** le filtre constitue la face supérieure du boîtier (11).

11. Installation selon la revendication 10, **caractérisée en ce que** le boîtier (11) est installé dans le sol de la stalle de traite (1) et la face supérieure du boîtier (11) est constituée d'un élément en forme de dôme (18).

12. Installation selon l'une quelconque des revendications précédentes, **caractérisée en ce que** ladite installation comprend un dispositif de nettoyage (19) pour le boîtier (11).

13. Installation selon la revendication 10, **caractérisée en ce que** le dispositif de nettoyage (19) est constitué d'un dispositif de pulvérisation pour la face supérieure du boîtier (11).
